# EUROPÄISCHE PATENTSCHRIFT

(11) **EP 3 457 529 B1**
(45) Veröffentlichungstag und Bekanntmachung des Hinweises auf die Patenterteilung: **15.04.2020**
(21) Anmeldenummer: 18194045.3
(22) Anmeldetag: 12.09.2018
(51) Int. Cl.: H02K 1/14, H02K 21/24, H02K 37/12

(54) **SCHEIBENLÄUFERMOTOR**
DISC MOTOR
MOTEUR À INDUIT EN DISQUE

(30) Priorität: 13.09.2017 DE 102017121235
(43) Veröffentlichungstag der Anmeldung: 20.03.2019
(73) Patentinhaber: SCHUNK Electronic Solutions GmbH, 78112 St. Georgen (DE)
(72) Erfinder: Ruggieri, Patrick, 78647 Trossingen (DE)
(74) Vertreter: DREISS Patentanwälte PartG mbB

(56) Entgegenhaltungen:
- DE-T2- 69 601 230
- JP-A- S6 380 751
- JP-A- 2014 121 175

## Beschreibung

Die Erfindung betrifft einen Scheibenläufermotor mit einem Stator und einem gegenüber dem Stator um eine Drehachse drehbar angeordneten scheibenförmigen Rotor, wobei der Stator Spulen aufweist, die jeweils eine einen Kernbereich umgebende Wicklung aufweisen, und wobei der Rotor mit den Spulen zusammenwirkende, entlang einer zur Drehachse verlaufenden Kreisbahn angeordnete Magnete aufweist. Bei derartigen Motoren handelt es sich insbesondere um permanenterregte Synchronmotoren.

Derartige Motoren werden insbesondere als Servomotoren, als Stellmotoren oder als Antriebsmotoren eingesetzt. Dabei wird das Magnetfeld des Läufers mit dem Magnetfeld des Stators so kombiniert, dass der Läufer ein Wegstück "nach vorne" gezogen wird und vom Magnetfeld hinter sich abgestoßen wird. Hat der Läufer eine bestimmte Position erreicht, zu der er gezogen wurde, so wird umgepolt, und der Läufer wird von dieser Position nun weggedrückt und zum nächsten Magneten hingezogen. Dadurch, dass insbesondere der Stator zwei etwas versetzte Magnetfeld-Erzeuger besitzt, befindet sich immer mindestens ein Läufermagnet gerade "auf halbem Weg", was eine Festlegung der Laufrichtung ermöglicht.

Aus der JP-S63-80751 A (MATSUSHITA ELECTRIC WORKS LTD - 11.4.1988) ist ein Schrittmotor mit Merkmalen des Oberbegriffs des Patentanspruchs 1 bekannt. Der Motor sieht dabei einstückig mit einem Joch ausgebildete Feldlenkelement vor.

Aus der DE 69601230 T2 ist ein elektromagnetischer Betätiger mit mindestens einer magnetischen Verriegelungsstellung bekannt.
Der Erfindung liegt die Aufgabe zugrunde, einen eingangs genannten Scheibenläufermotor bereitzustellen, der einen vergleichsweise einfachen Aufbau aufweist und dennoch funktionssicher arbeitet.

Diese Aufgabe wird gelöst durch einen Scheibenläufermotor mit den Merkmalen des Patentanspruchs 1.

Die Erfindung hat folglich den Vorteil, dass vergleichsweise wenig Spulen Verwendung finden können, die mit vergleichsweise vielen Magneten zusammenwirken. Durch Vorsehen des Feldlenkelements wird also das von einer Spule erzeugte Magnetfeld zu mehreren Magneten hin geführt.

Die Feldlenkelemente können dabei das Magnetfeld bündeln, sammeln, führen oder so beeinflussen, dass das Magnetfeld in geeigneter Art und Weise hin zu den Magneten gelenkt wird. Bei einem Magnetfeld handelt es sich um eine vektorielle Größe mit einer Richtung und einer Intensität. Die Feldlenkelemente können beides beeinflussen, die Richtung des Magnetfeldes und dessen Intensität.

Die Magnete können dabei insbesondere an der den Spulen zugewandten Unterseite des Rotors angeordnet sein. Denkbar ist auch, dass die Magnete in den Rotor integriert sind. Die Magnete können als eigene Bauteile ausgebildet sein; denkbar ist auch, dass einzelne Teilabschnitte des Rotors entsprechend magnetisiert sind.

Die Spulenachsen sind dabei vorzugsweise parallel zur Drehachse angeordnet, so dass die Spule eine dem Rotor zugewandte Stirnseite aufweist. Die Feldlenkelemente sind vorzugsweise an diesen Stirnseiten angeordnet. Die Feldlenkelemente sind dabei so ausgebildet, dass sie das von der Spule erzeugte Magnetfeld hin zu den mehreren Magneten auffächern.

Ferner ist vorgesehen, dass die Feldlenkelemente jeweils einen Kernabschnitt aufweisen, der in den Kernbereich der jeweiligen Spule eingreift und der in den Kernbereich parallel zur Drehachse eingesteckt ist. Dabei kann vorteilhaft sein, wenn in den Kernbereichen der Spulen keine sonstigen Magnetkerne vorhanden sind, insbesondere keine Blechpakte oder dergleichen. Die Kernabschnitte können dabei komplementär zur Geometrie der Kernbereiche ausgebildet sein.

Die Feldlenkelemente als solche weisen vorzugsweise einen dem Rotor zugewandten Rotorabschnitt auf, an dem in axialer Richtung hin zum Rotor erstreckende Erhebungen vorgesehen sind. Das Vorsehen dieser, dem Rotor bzw. dessen Magneten zugewandten Erhebungen, führt zu einem geeigneten Umlenken bzw. Auffächern des Magnetfelds hin zu den Magneten.

Die Erhebungen können insbesondere als stegartig ausgebildete Zähne, die sich in radialer Richtung erstrecken, ausgebildet sein. Zwischen zwei benachbarten Zähnen kann dabei eine Lücke vorgesehen sein. Vorteilhafterweise sind sämtliche Zähne gleich ausgebildet. Durch Vorsehen der Zähne und der Lücken kann das Magnetfeld entsprechend günstig geführt werden, um den Rotor mit hohem Wirkungsgrad anzutreiben.

Gemäß der Erfindung ist weiterhin denkbar, dass n-Spulen auf einem Grundkörper vorgesehen sind, die jeweils in einem Kreissegment von 360°/n angeordnet sind, wobei n insbesondere 3 oder ein Vielfaches davon oder 2 oder ein Vielfaches davon ist. Wenn n = 3, sind vorzugsweise 3, 6 oder 9 Spulen vorgesehen, wobei jede der Spulen sich in einem Kreissegment von 120°, 60° oder 30° befindet. Die Verteilung der Spulen ergibt sich aus der Stellung zu den Magneten, genauer: Die Spulen müssen bei 0°, 120° und 240° liegen, wobei sich die Angaben auf elektrische Grad beziehen. Ein Polpaar = 360°. Wenn n beispielsweise 2, 4, 6 oder 8 ist, erstrecken sich die Kreissegmente über einen Bereich von 180°, 90°, 45° oder 22,5°. Eine vorteilhafte Kombination ergibt sich dann, wenn drei oder ein Vielfaches von drei Spulen vorgesehen sind, wobei jede Spule ein Feldlenkelement mit sechs oder mehr Zähnen aufweist. Denkbar ist auch, dass sechs oder ein Vielfaches von drei Spulen mit sechs oder ein Vielfaches von drei Feldlenkelementen Verwendung finden, wobei jedes Feldlenkelement dann drei oder ein Vielfaches von drei Zähnen aufweist.

Eine vorteilhafte Ausgestaltung ergibt sich dann, wenn die Spulen eine radial äußere Mantelfläche aufweisen, die wenigstens abschnittsweise, und vorzugsweise vollständig entlang eines um die Drehachse verlaufenden Kreiszylinders verläuft. Die Außenkontur der Spulen kann dabei im Wesentlichen der Außenkontur des Rotors entsprechen. Wenn die Spulen auf einem Grundkörper angeordnet sind, kann die Außenkontur der Spulen entsprechend der Außenkontur des Grundkörpers ausgebildet sein, oder bezüglich dieser nach radial innen zurückversetzt sein.

Der erfindungsgemäße Scheibenläufermotor kann insbesondere eine Mittendurchführung aufweisen. Dadurch können beispielsweise Leitungen, Kabel oder Sichtachsen entlang der Drehachse durch den Motor hindurch geführt werden.

Es hat sich als vorteilhaft herausgestellt, wenn die Feldlenkelemente zerspanend oder mittels einem 3D-Metalldruck-Verfahren hergestellt sind. Derartige Feldlenkelemente können dann einen schichtweisen Aufbau und eine Form aufweisen, die optimal an die Gegebenheiten angepasst ist.

Zur funktionssicheren Anordnung der Feldlenkelemente an den Stirnseiten der Spulenträger ist vorteilhaft, wenn die Feldlenkelemente mit diesen vergossen sind. Als Vergussmaterial kann dabei ein geeigneter Kunststoff Verwendung finden.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1: den Aufbau eines erfindungsgemäßen Scheibenläufermotors in Explosionsdarstellung;
- Figur 2: eine der Figur 1 entsprechende Darstellung einer anderen Ausführungsform eines erfindungsgemäßen Scheibenläufermotors; und
- Figur 3: einen Ausschnitt einer dritten Ausführungsform eines erfindungsgemäßen Scheibenläufermotors.

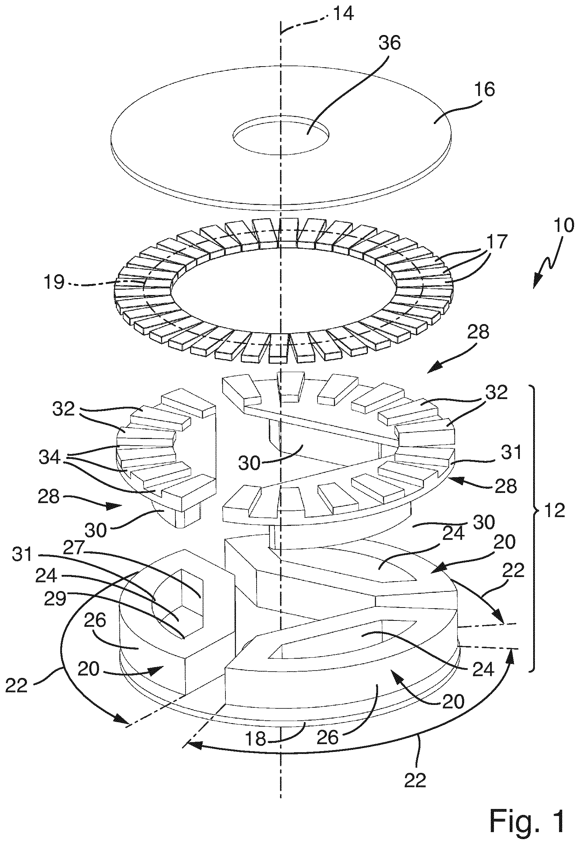

In der Figur 1 ist ein bürstenloser, permanent erregter, synchronarbeitender Scheibenläufermotor 10 mit einem Stator 12 und einem gegenüber dem Stator 12 um eine Drehachse 14 drehbar angeordneten scheibenförmigen Rotor 16 gezeigt. Der Stator 12 weist dabei einen Grundkörper 18 auf, auf dem insgesamt drei Spulen 20 angeordnet sind. Die Spulen erstrecken sich dabei jeweils über einen Winkelbereich 22 von knapp ca. 120°. Die Spulen 20 weisen ferner einen Kernbereich 24 und eine radial außen liegende Mantelfläche 26 auf. Die Mantelflächen 26 liegen dabei in einem um die Drehachse 14 verlaufenden Kreiszylinder. Die den Kernbereich 24 begrenzende Mantelfläche weist verschiedene Abschnitte auf. Der im radial inneren Bereich liegende Abschnitt 27 verläuft entlang einer geraden Ebene, die parallel zur Drehachse 14 verläuft. Die sich daran anschließenden Abschnitte 29 liegen in zwei geraden Ebenen, die sich in der Drehachse 14 schneiden. Der radial äußere Abschnitt 31 läuft parallel zur Mantelfläche 26.

Die Wicklung der Spulen 20 kann dabei insbesondere um eine parallel zur Drehachse 14 verlaufende Spulenachse erfolgen. Die Wicklungen liegen dann mehr oder weniger parallel zum Grundkörper 18.

Der Stator 12 umfasst ferner drei Feldlenkelemente 28, die jeweils auf einer dem Rotor 16 zugewandten Stirnseite der Spulen 20 angeordnet sind. Die Feldlenkelemente 28 weisen jeweils einen radial zurückgesetzten Kernabschnitt 30 auf. Die Kernabschnitte 30 sind im montierten Zustand in die Kernbereiche 24 der Spulen 20 eingesetzt und zu diesem komplementär ausgebildet. Die Feldlenkelemente 28 weisen auf ihrer dem Rotor 16 zugewandten Seite einen Rotorabschnitt 31 auf, der sich in axialer Richtung hin zum Rotor 16 erstreckende Erhebungen in Form von Zähnen 32 aufweist. Die Zähne 32 sind stegartig und erstrecken sich in radialer Richtung; liegen also auf einem durch die Drehachse 14 verlaufenden Strahl. Gemäß Figur 1 weist jedes Feldlenkelement 28 insgesamt sechs Zähne 32 sowie zwischen den jeweiligen Zähnen 32 liegende Zahnlücken 34 auf. Die einzelne Feldlenkelement 28 erstrecken sich, entsprechend der Spulen 20, über die jeweiligen Winkelbereiche 22.

Der Rotor 16 weist auf seiner dem Stator 12 zugewandten Unterseite eine Vielzahl von auf einer um die Drehachse 14 liegenden Kreisbahn 19 angeordneten Magneten 17 auf. Gemäß Figur 1 sind insgesamt zweiunddreißig Magnete 17 vorgesehen, die quaderförmig ausgebildet sind und sich jeweils in radialer Richtung erstrecken. Die Magnete 17 sind dabei an der Unterseite des Rotors 16 angeordnet. Die Magnete können auch in den Rotor 16 integriert sein oder durch entsprechend magnetisierte Rotorabschnitte gebildet sein.

In Betrieb werden die drei Spulen 20 nacheinander bestromt, wodurch von den Spulen 20 jeweils ein Magnetfeld induziert wird. Die Magnetfelder werden dann von den jeweiligen Feldlenkelementen 20 umgelenkt bzw. aufgefächert, so dass der Rotor 16 bzw. dessen Magnete 17 in eine Drehbewegung um die Drehachse 14 versetzt werden. Im Betrieb wirkt folglich ein Feldlenkelement 28 mit mehreren Magneten 17, im Ausführungsbeispiel gemäß Figur 1 mit knapp zehn Magneten, zusammen.

Der Rotor 16 weist einen zentralen Durchbruch 36 auf. Entsprechend weist der Grundkörper 18 einen in den Figuren nicht gezeigten Durchbruch auf, wodurch insgesamt eine Mittendurchführung durch den Motor 10 bereitgestellt wird.

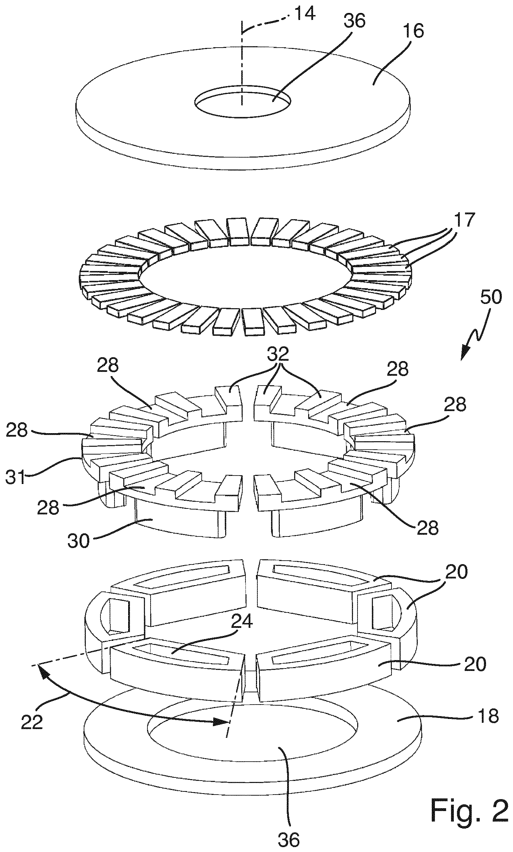

Der in der Figur 2 gezeigte Motor 50 entspricht im Wesentlichen dem Motor 10 gemäß Figur 1, wobei entsprechende Bauteile mit entsprechenden Bezugszeichen versehen sind. Im Unterschied zum Motor 10 gemäß Figur 1 sind beim Motor 50 gemäß Figur 2 insgesamt sechs Spulen 20 vorgesehen, sowie sechs Feldlenkelemente 28. Die Feldlenkelemente 28 weisen in dieser Ausführungsform nur drei Zähne 32 auf. Bei dem Motor 50 handelt es sich ebenfalls um einen Drei-Phasen-Synchronmotor, wobei hier dann vorzugsweise jeweils zwei gegenüberliegende Spule 20 zeitgleich bestromt werden.

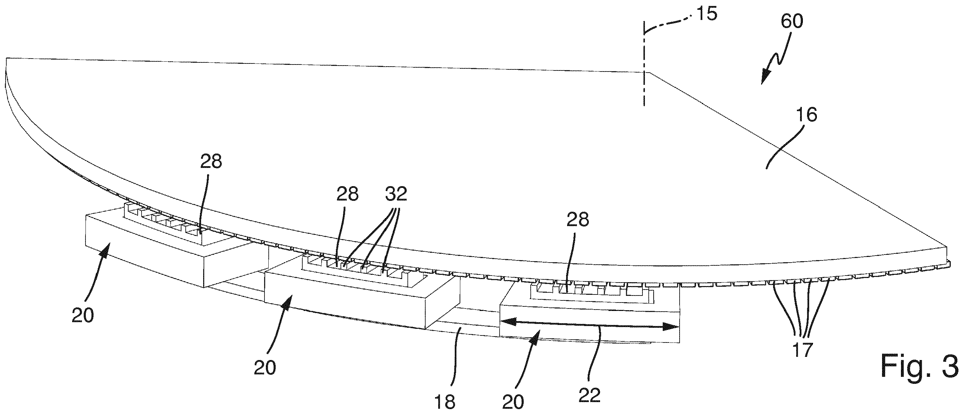

In Figur 3 ist ein Ausschnitt eines weiteren Scheibenläufermotors 60 gezeigt, wobei Bauteile, die dem Motor 10 entsprechen entsprechende Bezugszeichen tragen. Der in Figur 3 gezeigte Ausschnitt zeigt den Rotor 16 mit einer Vielzahl von daran vorgesehenen Magneten 17. Am Grundkörper 18 sind in Figur 3 drei Spulen 20 gezeigt, wobei der Motor 50 insgesamt 21 Spulen 20 vorsieht. Jede Spule 20 weist ein Feldlenkelement 28 auf, das die von den Spulen 20 erzeugten Magnetfelder in günstiger Art und Weise hin zu mehreren Magneten 17 umleiten.

Insbesondere durch Vorsehen von einer großen Anzahl von Spulen 20 kann ein Schrittmotor auf einfache Art und Weise realisiert werden. Durch kurzes Bestromen einzelner Spulen 20 kann erreicht werden, dass der Rotor 16 einen definierten Drehwinkel zurücklegt. Durch entsprechendes Bestromen von anderen Spulen 20 kann ein gezieltes Abbremsen und Halten des Rotors an einer vorgegebenen Position erreicht werden.

Die einzelnen Feldlenkelemente können insbesondere mittels eines 3D-Metalldruck-Verfahrens hergestellt werden. Dabei bietet sich insbesondere ein schichtweiser Aufbau an, um Störeinflüsse des Magnetfelds zu reduzieren.

Die Feldlenkelemente 28 können im verbauten Zustand mit den Spulen vergossen sein, um ein sicheres Fügen der Feldlenkelemente 28 an den Spulen zu erreichen, ohne dass die Magnetfelder negativ beeinträchtigt werden.

## Patentansprüche

1. Scheibenläufermotor (10) mit einem Stator (12) und einem gegenüber dem Stator (12) um eine Drehachse (14) drehbar angeordneten scheibenförmigen Rotor (16), wobei der Stator (12) Spulen (20) aufweist, die jeweils eine einen Kernbereich (24) umgebende Wicklung aufweisen, und wobei der Rotor (16) mit den Spulen (20) zusammenwirkende, entlang einer Kreisbahn (19) angeordnete Magnete (17) aufweist, wobei sich die Spulen (20) jeweils über einen Winkelbereich (22) erstecken, innerhalb dessen sich am Rotor (16) mehrere Magnete (17) befinden und wobei auf der dem Rotor (16) zugewandten Seite der jeweiligen Spule (20) jeweils ein Feldlenkelement (28) vorgesehen ist, das das von der jeweiligen Spule (20) erzeugte Magnetfeld hin zu den mehreren Magneten (17) umlenkt, wobei das jeweilige Feldlenkelement (28) einen dem Rotor zugewandten Rotorabschnitt (31) und einen in den Kernbereich (19) der jeweiligen Spule (20) parallel zur Drehachse (14) eingesteckten Kernabschnitt (30) aufweist, **gekennzeichnet dadurch, dass** die Kernabschnitte (30) sich nur über einen Teilbereich der Höhe der Spulen (20) erstrecken.

2. Motor (10) nach Anspruch 1, **dadurch gekennzeichnet, dass** der jeweilige Kernabschnitt (30) gegenüber dem Rotorabschnitt (31) radial zurückgesetzt ist.

3. Motor (10) nach Anspruch 1 oder 2, **dadurch gekennzeichnet, dass** die Kernabschnitte (30) komplementär zur Geometrie der Kernbereiche (19) ausgebildet sind.

4. Motor (10) nach einem der vorhergehenden Ansprüche, **dadurch gekennzeichnet, dass** am Rotorabschnitt (31) sich in axialer Richtung hin zum Rotor erstreckende Erhebungen (32) vorgesehen sind.

5. Motor (10) nach Anspruch 4, **dadurch gekennzeichnet, dass** die Erhebungen (32) als stegartig sich in radialer Richtung erstreckende Zähne ausgebildet sind.

6. Motor (10) nach einem der vorhergehenden Ansprüche, **dadurch gekennzeichnet, dass** n Spulen (20) auf einem Grundkörper (18) vorgesehen sind, die auf dem Grundkörper (18) jeweils in einem Kreissegment von 360°/n angeordnet sind, wobei n insbesondere 3 oder ein Vielfaches davon, oder 2 oder ein Vielfaches davon ist.

7. Motor (10) nach einem der vorhergehenden Ansprüche, **dadurch gekennzeichnet, dass** die Spulen (20) eine radial äußere Mantelfläche (26) aufweisen, die wenigstens abschnittsweise entlang eines um die Drehachse (14) verlaufenden Kreiszylinders verläuft.

8. Motor (10) nach einem der vorhergehenden Ansprüche, **dadurch gekennzeichnet, dass** die den Kernbereich (24) begrenzende Mantelfläche verschiedene Abschnitte aufweist, nämlich im radial inneren Bereich liegende einen Abschnitt (27), entlang einer zur Drehachse (14) parallel verlaufenden Ebene verläuft, und/oder sich daran anschließende Abschnitte (29), die in zwei Ebenen liegen, die sich in der Drehachse (14) schneiden, und/oder einen radial äußere Abschnitt (31), der parallel zur Mantelfläche (26) verläuft.

9. Motor (10) nach einem der vorhergehenden Ansprüche, **dadurch gekennzeichnet, dass** die Feldlenkelemente (28) mittels eines 3D-Metalldruck-Verfahrens hergestellt sind.

10. Motor (10) nach einem der vorhergehenden Ansprüche, **dadurch gekennzeichnet, dass** die Feldlenkelemente (28) mit den Spulen (20) vergossen sind.

11. Motor (10) nach einem der vorhergehenden Ansprüche, **dadurch gekennzeichnet, dass** der Motor (10) eine Mittendurchführung aufweist.

## Claims

1. Disc rotor motor (10) with a stator (12) and a disc-shaped rotor (16) arranged rotatably about an axis of rotation (14) relative to the stator (12), wherein the stator (12) has coils (20), each of which has a winding surrounding a core region (24), and wherein the rotor (16) has magnets (17) which cooperate with the coils (20) and are arranged along a circular path (19), wherein the coils (20) each extend over an angular region (22), within which a plurality of magnets (17) are located on the rotor (16), and wherein a respective field-directing element (28) is provided on the side of the respective coil (20) facing the rotor (16), which field-directing element directs the magnetic field generated by the respective coil (20) towards the plurality of magnets (17), the respective field-directing element (28) having a rotor section (31) facing the rotor and a core section (30) parallel to the axis of rotation (14) inserted into the core region (19) of the respective coil (20), **characterized in that** the core sections (30) extend only over a partial region of the height of the coils (20).

2. Motor (10) according to claim 1, **characterized in that** the respective core section (30) is radially set back relative to the rotor section (31).

3. Motor (10) according to claim 1 or 2, **characterized in that** the core sections (30) are designed complementary to the geometry of the core region (19).

4. Motor (10) according to any of the preceding claims, **characterized in that** elevations (32) extending in the axial direction towards the rotor are provided on the rotor section (31).

5. Motor (10) according to claim 4, **characterized in that** the elevations (32) are formed as web-like teeth extending in the radial direction.

6. Motor (10) according to one of the preceding claims, **characterized in that** n coils (20) are provided on a base body (18), which coils are each arranged on the base body (18) in a circular segment of 360°/n, wherein n is in particular 3 or a multiple thereof, or 2 or a multiple thereof.

7. Motor (10) according to one of the preceding claims, **characterized in that** the coils (20) have a radially outer circumferential surface (26) which extends at least in sections along a circular cylinder extending around the axis of rotation (14).

8. Motor (10) according to one of the preceding claims, **characterized in that** the outer surface delimiting the core region (24) has different sections, namely a section (27) lying in the radially inner region and running along a plane running parallel to the axis of rotation (14), and/or adjoining sections (29) lying in two planes which intersect in the axis of rotation (14), and/or a radially outer section (31) which runs parallel to the outer surface (26).

9. Motor (10) according to any of the preceding claims, **characterized in that** the field-directing elements (28) are manufactured by means of a 3D metal printing process.

10. Motor (10) according to one of the preceding claims, **characterized in that** the field-directing elements (28) are casted with the coils (20).

11. Motor (10) according to one of the preceding claims, **characterized in that** the motor (10) has a central through-hole.

## Revendications

1. Moteur à disque (10) avec un stator (12) et un rotor (16) en forme de disque disposé de manière à pouvoir tourner par rapport au stator (12) autour d'un axe de rotation (14), le stator (12) présentant des bobines (20) dont chacune comporte un enroulement entourant une zone de noyau (24), et le rotor (16) présentant des aimants (17) qui coopèrent avec les bobines (20) et sont disposés le long d'une trajectoire circulaire (19), les bobines (20) s'étendant chacune sur une zone angulaire (22), dans lequel une pluralité d'aimants (17) sont situés sur le rotor (16), et dans lequel un élément de direction de champ (28) respectif est prévu sur le côté de la bobine (20) respective tourné vers le rotor (16), qui dévie le champ magnétique généré par la bobine (20) respective vers la pluralité d'aimants (17), chaque élément de direction de champ (28) présentant une section de rotor (31) tournée vers le rotor et une section de noyau (30) insérée dans la zone de noyau (19) de la bobine respective (20) parallèlement à l'axe de rotation (14), **caractérisé en ce que** les sections de noyau (30) s'étendent seulement sur une zone partielle de la hauteur des bobines (20).

2. Moteur (10) selon la revendication 1, **caractérisé en ce que** la section de noyau (30) respective est radialement en retrait par rapport à la section de rotor (31).

3. Moteur (10) selon la revendication 1 ou 2, **caractérisé en ce que** les sections de noyau (30) sont conçues de manière complémentaire à la géométrie des zones de noyau (19).

4. Moteur (10) selon l'une des revendications précédentes, **caractérisé en ce que** des élévations (32) s'étendant dans la direction axiale vers le rotor sont prévues sur la partie rotor (31).

5. Moteur (10) selon la revendication 4, **caractérisé en ce que** les élévations (32) sont formées comme des dentures en forme de toile s'étendant dans la direction radiale.

6. Moteur (10) selon l'une des revendications précédentes, **caractérisé en ce que** n bobines (20) sont prévues sur un corps de base (18), lesquelles bobines sont chacune disposées sur le corps de base (18) dans un segment circulaire de 360°/n, où n est en particulier 3 ou un multiple de celui-ci, ou 2 ou un multiple de celui-ci.

7. Moteur (10) selon l'une des revendications précédentes, **caractérisé en ce que** les bobines (20) présentent une surface circonférentielle radialement extérieure (26) qui s'étend au moins par sections le long d'un cylindre circulaire s'étendant autour de l'axe de rotation (14).

8. Moteur (10) selon l'une des revendications précédentes, **caractérisé en ce que** la surface extérieure délimitant la zone centrale (24) présente différentes sections, à savoir une section (27) située dans la zone radialement intérieure et s'étendant le long d'un plan s'étendant parallèlement à l'axe de rotation (14), et/ou des sections adjacentes (29) situées dans deux plans qui se coupent dans l'axe de rotation (14), et/ou une section radialement extérieure (31) qui s'étend parallèlement à la surface extérieure (26).

9. Moteur (10) selon l'une des revendications précédentes, **caractérisé en ce que** les éléments de direction de champ (28) sont réalisés au moyen d'un procédé d'impression métallique en 3D.

10. Moteur (10) selon l'une des revendications précédentes, **caractérisé en ce que** les élément de direction de champ (28) sont scellés avec les bobines (20).

11. Moteur (10) selon l'une des revendications précédentes, **caractérisé en ce que** le moteur (10) a une traversée centrale.
